# EUROPÄISCHE PATENTSCHRIFT

(11) **EP 2 712 493 B1**
(45) Veröffentlichungstag und Bekanntmachung des Hinweises auf die Patenterteilung: **13.06.2018**
(21) Anmeldenummer: 13175215.6
(22) Anmeldetag: 05.07.2013
(51) Int. Cl.: A01B 79/00

(54) **System zur Erkennung eines anbaubaren Arbeitsgeräts**
System for recognizing an attachable work device
Système de reconnaissance d'un outil pouvant être attaché

(30) Priorität: 28.09.2012 DE 102012109210
(43) Veröffentlichungstag der Anmeldung: 02.04.2014
(73) Patentinhaber: CLAAS Tractor SAS, 78141 Velizy-Villacoublay (FR)
(72) Erfinder: Bizouarn, Loic, 78210 St Cyr`l Ecole (FR)
(74) Vertreter: Budach, Steffen

(56) Entgegenhaltungen:
- EP-A1- 1 346 622
- EP-A1- 2 018 981
- DE-C1- 10 153 145
- US-A1- 2004 024 510
- US-A1- 2012 016 517

## Beschreibung

Die Erfindung betrifft ein System gemäß dem Oberbegriff des Anspruchs 1.

Landwirtschaftliche Fahrzeuge wie insbesondere Traktoren werden oftmals in Kombination mit einem daran anbaubaren Arbeitsgerät eingesetzt. Bei einem an einen Traktor anbaubaren Arbeitsgerät kann es sich beispielsweise um eine Futtererntemaschine wie eine Ballenpresse, Heuwerbungsmaschine (Schwader, Wender) etc., oder um eine Bodenbearbeitungsmaschine, Saat- oder Düngemaschine oder dergleichen handeln. Zahlreiche weitere Typen anbaubarer Arbeitsgeräte, wie beispielsweise auch Erntevorsatzgeräte sind aus der Praxis der Landtechnik bekannt.

Damit ein landwirtschaftliches Fahrzeug wie ein Traktor auf sichere und zudem möglichst effiziente Weise mit einem Arbeitsgerät zusammenarbeitet, ist es zweckmäßig, die technischen Anforderungen und Gegebenheiten des jeweiligen Arbeitsgeräts zu berücksichtigen, die beispielsweise herstellerbedingt, baujahrbedingt, austattungsbedingt etc. auch für gleiche Arten von Geräten stark voneinander abweichen können. Aufgrund der Vielzahl auf dem Markt verfügbarer Geräte stellt es für Maschinenbediener häufig eine große Schwierigkeit dar, sich in Kenntnis der jeweils relevanten Informationen zu setzen. Die Annahme unrichtiger Informationen oder das Fehlen von Informationen können nachteilige Auswirkungen auf die Funktionsweise, Sicherheit, Genauigkeit, Effizienz etc. des Arbeitsgeräts und/oder der Kombination aus Arbeitsgerät und Fahrzeug haben.

Aus dem Stand der Technik sind Systeme bekannt, wonach eine Erkennung eines angebauten Arbeitsgeräts über ein zwischen Arbeitsmaschine und Arbeitsgerät kommunizierendes Bussystem erfolgt, d.h. über einen direkten, kabelgebundenen Datenaustausch zwischen den Geräten. Verwiesen sei in diesem Zusammenhang beispielsweise auf die DE 198 04 740 A1.

Nachteilig daran ist, dass Fahrzeug und Arbeitsgerät über miteinander kommunizierende Bussysteme verfügen müssen. Dies ist zumindest bei älteren Fahrzeugen und/oder älteren Arbeitsgeräten nicht der Fall und nur mit hohem Aufwand nachzurüsten. Zudem bestehen bei derartigen Systemen oftmals Probleme der Kompatibilität, was unterschiedlichste Ursachen haben kann. Insbesondere werden unter verschiedenen Herstellern der Fahrzeuge oder Arbeitsgeräte oftmals unterschiedliche Kommunikationsstandards verwendet, die eine Kommunikation ausschließen oder zumindest fehlerträchtig machen. Ein weiterer Nachteil ist die notwendige Kabelverbindung zwischen Fahrzeug und Arbeitsgerät, die nicht nur lästig in der Handhabung ist, sondern auch störungsanfällig sein kann.

Die US 2004 0024510 A1 offenbart ein System und Verfahren zum Vorsehen von Daten für ein Maschinensteuersystem, wobei die Daten jedoch auf einem entfernt gelegenen Datenspeichersystem abgelegt sind und eine Verbindung mit diesem entfernt gelegenen Datenspeichersystem zum Datenabruf notwendig ist.

Aus der DE 10 2007 034 167 A1 ist es bekannt, Identifikationsdaten eines Arbeitsgeräts von einem im Radiofrequenzbereich auslesbaren Transponder (RFID) auszulesen. Einige der zuvor genannten Nachteile werden damit vermieden, jedoch stellt die nötige Ausstattung mit einem Transponder sowie einem zugehörigen Lese-/Schreibgerät einen hohen Kostenaufwand dar.

Vor diesem Hintergrund ist es Aufgabe der vorliegenden Erfindung, mit einfachen Mitteln eine Unterstützung zu schaffen, ein an ein Fahrzeug anbaubares Arbeitsgerät in dessen wesentlichen Merkmalen erkennen zu können.

Die Aufgabe wird gelöst durch ein System gemäß Anspruch 1. Dieses zeichnet sich aus durch ein dem Arbeitsgerät zugeordnetes optisch lesbares Zeichen, welches das Arbeitsgerät kennzeichnende Informationen enthält, sowie eine optische Leseeinrichtung, die betreibbar ist, aus dem Zeichen darin enthaltene Informationen über das Arbeitsgerät auszulesen.

Das erfindungsgemäße System beruht zunächst auf der Erkenntnis, dass zwischen Arbeitsgerät und Fahrzeug kommunizierende Datenbussysteme insbesondere hinsichtlich Kompatibilität und Nachrüstaufwand Nachteile aufweisen, die insbesondere bei älteren Fahrzeugen bzw. Arbeitsgeräten zum Tragen kommen. Als Alternative zu der in DE 10 2007 034 167 A1 beschriebenen kostenaufwändigen Nutzung der RFID-Technik, beruht die erfindungsgemäße Lösung auf einer optischen Erfassung eines dem Arbeitsgerät zugeordneten Zeichens. Bei dem Zeichen kann es sich zunächst um ein beliebig gestaltetes optisch lesbares Zeichen handeln, das geeignet ist, das Arbeitsgerät kennzeichnende Informationen unterschiedlicher Art zu beinhalten. Erfindungsgemäß zeichnet sich das System daneben aus durch eine optische Leseeinrichtung, mit der sich in dem Zeichen enthaltene Informationen über das Arbeitsgerät wieder ausgelesen werden können, um beispielsweise einem Maschinenbediener zur Verfügung zu stehen oder auf noch näher zu beschreibende Weise dem Fahrzeug zugeführt zu werden. Da sich ein optisch lesbares Zeichen - beispielsweise durch Drucken - deutlich einfacher und kostengünstiger herstellen lässt als ein RFID-Chip, kann mittels des Systems auf vorteilhafte Weise ein Arbeitsgerät schnell und mit verhältnismäßig einfachen Mitteln erkannt werden. Aufgrund der leichten Herstellbarkeit ist eine einfache und kostengünstige Möglichkeit geschaffen, unterschiedliche, insbesondere auch ältere Arbeitsgeräte mit einer maschinell lesbaren Gerätekennzeichnung zu versehen. Demnach ist auch eine Nachrüstung mit geringem Aufwand möglich. Kompatibilitätsprobleme bestehen nicht, da sich das Zeichen jeder Art von Arbeitsgerät nachträglich zuordnen lässt. Aufgrund eines geringen möglichen Materialwerts des Zeichens besteht praktisch kein Diebstahlrisiko, selbst wenn dieses beispielsweise leicht entfernbar an der Arbeitsmaschine angebracht ist. In dem Zeichen hinterlegte Informationen lassen sich einfach durch Neuherstellung ändern.

Damit das erfindungsgemäß System die über das Arbeitsgerät in dem Zeichen hinterlegten Informationen dem Fahrzeug zugänglich machen kann, verfügt gemäß einer vorteilhaften Weiterbildung das landwirtschaftliche Fahrzeug über einen Bordrechner, der mit der Leseeinrichtung in Datenaustauschbeziehung bringbar ist, um ausgelesene Informationen über das Arbeitsgerät zu empfangen. Durch die Datenaustauschbeziehung werden weiterhin Fehler vermieden, die in der Praxis beispielsweise durch manuelle Dateneingabe entstehen können. Zudem lassen sich die ausgelesenen Informationen in kurzer Zeit in den Bordrechner übertragen. Der Bordrechner ist dazu vorteilhaft mit einer entsprechenden Datenschnittstelle ausgestattet.

Bei einer vorteilhaften Ausgestaltung des Systems ist der Bordrechner Teil einer Einrichtung zur Steuerung und/oder Überwachung von Arbeitseinstellungen des Fahrzeugs ist, um betreibbar zu sein, auf Grundlage empfangener Informationen des Arbeitsgeräts konfigurierende Einstellungen am Fahrzeug vorzunehmen. Mit anderen Worten ist damit vorteilhaft eine Möglichkeit geschaffen, die mit der optischen Leseeinrichtung ausgelesenen Informationen (betreffend das Arbeitsgerät) zur Konfiguration, d.h. zur Vornahme von Einstellungen am Fahrzeug zu nutzen. Die ausgelesenen Informationen werden dazu vom Bordrechner empfangen und können im Rahmen der Einrichtung zur Steuerung und/oder Überwachung von Arbeitseinstellungen des Fahrzeugs zur Vornahme jedweder Einstellung dienen. Beispielsweise könnten Einstellungen an Arbeitsaggregaten vorgenommen werden, wie an der Bordhydraulik (Belegung von Hydraulikkanälen, Flussraten, Zeitgeber), an Zapfwellenantrieben (z.B. maximales Drehmoment, Drehgeschwindigkeit), am Front- oder Heckkraftheber (Einstellhöhe). Daneben können weitere Informationen wie beispielsweise die Abmessungen des Arbeitsgeräts, dessen Gewicht, dessen Schwerpunktlage etc. für unterschiedliche Zwecke an den Bordrechner übergeben werden. Beispielsweise könnten die Informationen in ein bordeigenes Informationssystem des Fahrzeugs einfließen, um für eine Ertragskartierung, für die Lenkung, für die Navigation des Fahrzeugs usw. zur Verfügung zu stehen. Durch die maschinell unterstützte Erkennung und Übergabe der gerätespezifischer Informationen des Arbeitsgeräts an den Bordrechner wird der Fahrzeugbediener jedenfalls davon entlastet, diese Vielzahl an Informationen manuell dem Bordrechner zuzuführen.

Für die optische Leseeinrichtung bestehen verschiedene Ausführungsmöglichkeiten. Eine besonders sichere Datenübertragung wird erzielt, wenn die optische Leseeinrichtung dem Fahrzeug zugeordnet ist, indem diese in kabelgebundener Datenaustauschbeziehung mit dem Bordrechner des Fahrzeugs steht. Die Leseeinrichtung steht demnach in Kabelverbindung mit dem Bordrechner, wozu die Leseeinrichtung beispielsweise im Wesentlichen eine Kamera umfasst, die über ein Kabel mit dem Bordrechner verbunden ist. Die Kamera könnte demnach am Fahrzeug angebracht sein und zumindest für den Zweck des Auslesens des Zeichens aus einer Halterung herausnehmbar sein.

Gemäß einer vorteilhaften Weiterbildung der Erfindung ist die optische Leseeinrichtung einer mit dem Bordrechner in Datenaustauschbeziehung bringbaren mobilen Kommunikationseinrichtung zugeordnet, insbesondere indem die Leseeinrichtung in ein Smartphone, ein Mobiltelefon, einen Tablet-PC, einen sonstigen persönlichen digitalen Assistenten oder in ein Notebook integriert ist. Durch die Zuordnung zu einer mobilen Kommunikationseinrichtung ergibt sich zunächst der Vorteil, dass die Leseeinrichtung - ohne Kabelbindung zum Fahrzeug - an beliebigem Ort einsetzbar ist. Zum Datenaustausch mit dem Bordrechner können drahtlose Übertragungstechniken (Funk wie beispielsweise WiFi, Bluetooth oder Infrarot) zum Einsatz kommen. Alternativ wäre es denkbar, die mobile Kommunikationseinrichtung jeweils nur temporär - zum Zweck des Datenaustauschs - über ein Kabel mit dem Bordrechner zu verbinden. Der Bordrechner kann dazu vorzugsweise mit einem geeigneten, leicht zugänglichen Anschluss (z.B. USB-Schnittstelle in der Fahrerkabine) versehen sein. Handelt es sich bei der mobilen Kommunikationseinrichtung um ein Smartphone, ein Mobiltelefon, einen Tablet-PC, einen sonstigen persönlichen digitalen Assistenten oder ein Notebook, so ergibt sich der Vorteil, dass eine Leseeinrichtung in Form einer Kamera zumeist schon in diese Einrichtungen integriert ist. Der Bediener kann demnach vorteilhaft z.B. sein Smartphone dazu nutzen, das dem anzubauenden Arbeitsgerät zugeordnete Zeichen auszulesen und ausgelesene Informationen an den Bordrechner des Fahrzeugs zu übermitteln. Ein geeignetes Programm (beispielsweise eine sogenannte "App", d.h. ein über das Internet zu beziehendes Anwendungsprogramm für das Smartphone) kann zu diesem Zweck in den Speicher des Smartphones ladbar sein. Gleiches ist für andere mobile Kommunikationseinrichtungen denkbar.

Ganz allgemein, und insbesondere bei Nutzung einer wie zuvor genannten mobilen Kommunikationseinrichtung ist es vorteilhaft denkbar, dass das System eine Ausgabeeinrichtung umfasst, die geeignet ist, mittels der optischen Leseeinrichtung ausgelesene Informationen des Arbeitsgeräts an einen Bediener auszugeben, insbesondere diesem anzuzeigen. Bei Nutzung einer mobilen Kommunikationseinrichtung könnten beispielsweise unmittelbar nach dem Auslesen des Zeichens die darin enthaltenen Informationen auf einem Display der Einrichtung (z.B. Oberfläche des Smartphones) angezeigt werden. Dadurch könnte sich ein Bediener auf einfache Weise - und ganz unabhängig von sonstigen Tätigkeiten - technische Informationen über das Arbeitsgerät beschaffen. Andere Arten der Ausgabe sind denkbar, beispielsweise könnte auch eine akustische Ausgabe von Informationen vorgesehen sein, insbesondere im Fall von möglicherweise im Zeichen hinterlegten Warnhinweisen.

Die in dem Zeichen hinterlegten Informationen können grundsätzlich unterschiedlichen Charakters sein, d.h. verschiedensten technischen, aber auch nicht-technischen Zwecken dienen. Bevorzugt umfassen die Informationen gerätespezifische Angaben für den Betrieb des Arbeitsgeräts und/oder gerätespezifische Angaben zu Wartung, Reparatur und/oder Ersatzteilen des Arbeitsgeräts, und/oder individuell vergebbare Angaben zum Arbeitsgerät. Es können beispielsweise Angaben wie Name, Hersteller, Typ, Baujahr, Abmessungen (Arbeitstiefe, Arbeitsbreite, Länge), Gewicht, Schwerpunktlage des Arbeitsgeräts hinterlegt sein. Weiterhin können bevorzugte hydraulische Kanalbelegungen, Ventileinstellungen, Flussraten, Zeitgeberwerte oder Zapfwellengeschwindigkeiten, Zapfwellenmomente, Anschlussmaße hinterlegt sein. Viele weitere Angaben sind abhängig vom Typ des Arbeitsgeräts denkbar, die im Zusammenhang mit dem Betrieb des Arbeitsgeräts selbst im weitesten Sinne eine Rolle spielen können und/oder die für den angebauten Betrieb an das Fahrzeug von Nutzen sein können. Unter anderem könnten auch individuell für das Arbeitsgerät Informationen hinterlegt sein wie beispielsweise persönliche Erfahrungswerte oder Warnhinweise, die auf weiterhin vorteilhafte Weise vom Bordrechner ereignisgekoppelt (z.B. bei Überschreiten einer Fahrgeschwindigkeit) an den Bediener ausgegeben werden könnten.

Alternativ oder ergänzend können die in dem Zeichen hinterlegten Informationen einen Verweis auf eine weitere Informationsquelle, insbesondere eine Internetadresse, umfassen. Durch einen solchen Verweis wäre - eine bestehende Internetverbindung der Leseeinrichtung und/oder des Bordrechners vorausgesetzt - z.B. ein interaktiver Zugriff auf tiefergehende und/oder laufend aktualisierte Informationen beispielsweise eines Geräteherstellers möglich.

Damit das Zeichen eine hohe Dichte an Informationen enthalten kann und ggf. vor dem Zugriff durch Dritte schützbar ist, liegen die in dem Zeichen enthaltenen Informationen vorzugsweise in verschlüsselter Form vor. Eine binäre Verschlüsselung bietet dabei den Vorteil einer zuverlässigen Auslesbarkeit bei unterschiedlichen Lichtbedingungen, wenn nämlich das Zeichen aus einem schwarz-weiß Code gebildet wird. In einfacher Form kann es sich beispielsweise um einen Strichcode handeln.

Gemäß einer bevorzugten Ausbildung sind die Informationen in dem Zeichen als zweidimensionale Matrix, insbesondere als sogenannter QR-Code ("Quick Response code"), verschlüsselt. Das Zeichen besteht dann bevorzugt aus einer zweidimensionalen Matrix aus schwarzen und weißen Punkten, um die codierten Informationen binär darzustellen. Im Fall eines QR-Codes ist die Matrix quadratisch, wobei eine spezielle Markierung in drei der vier Ecken die Orientierung vorgibt. Die Daten des QR-Codes sind durch einen fehlerkorrigierenden Code in sich geschützt, so dass ein Verlust von bis zu 30% des Codes toleriert wird, d.h. ein Auslesen auch dann noch möglich ist. Für eine Anwendung an einem landwirtschaftlichen Arbeitsgerät bietet eine Codierung gemäß QR-Code demnach den Vorteil, dass auch bei möglichen betriebsbedingten Verschmutzungen ein zuverlässiges Auslesen des Zeichens möglich ist. Eine Matrixverschlüsselung bietet gegenüber einer eindimensionalen (Strichcode) Verschlüsselung daneben den Vorteil deutlich höherer Informationsdichte.

Zur Ermöglichung des Auslesens eines codierten Zeichens ist der Leseeinrichtung und/oder dem Bordrechner vorzugsweise eine Einrichtung zur Entschlüsselung des Zeichens zugeordnet.

Gemäß einer vorteilhaften Weiterbildung des Systems ist beispielsweise die mobile Kommunikationseinrichtung betreibbar, ein in deren Speicher ladbares elektronisches Datenverarbeitungsprogramm, insbesondere im Rahmen eines Anwendungsprogramms wie einer schon zuvor erwähnten "App" auszuführen, um das Zeichen zu entschlüsseln.

Das dem Arbeitsgerät zugeordnete Zeichen kann in unterschiedlicher Form eingesetzt werden. Auf bevorzugte Weise kann das Zeichen auf einen Träger aufgebracht, insbesondere darauf gedruckt sein, und zusammen mit dem Träger eine an das Arbeitsgerät anbringbare Kennzeichnung bilden. Hierbei kann es sich in einfachsten Fall um ein Stück Papier oder einen Aufkleber handeln, worauf das Zeichen aufgedruckt ist. Weiterhin könnte das Zeichen auf einem dem Arbeitsgerät zugeordneten elektronischen Display anzeigbar sein.

Alternativ zu einer Anbringung am Arbeitsgerät könnte das Zeichen - trotz dessen Zuordnung zum Arbeitsgerät - örtlich unabhängig vom Arbeitsgerät aufbewahrt werden, beispielsweise in einer Fahrerkabine des Fahrzeugs.

Bei dem landwirtschaftlichen Fahrzeug kann es sich grundsätzlich um jeden Typ landwirtschaftlichen Fahrzeugs handeln, an welches ein Arbeitsgerät anbaubar ist. Insbesondere kommt die Erfindung unter Verwendung eines Traktors, eines Mähdreschers oder eines Feldhäckslers zum Einsatz.

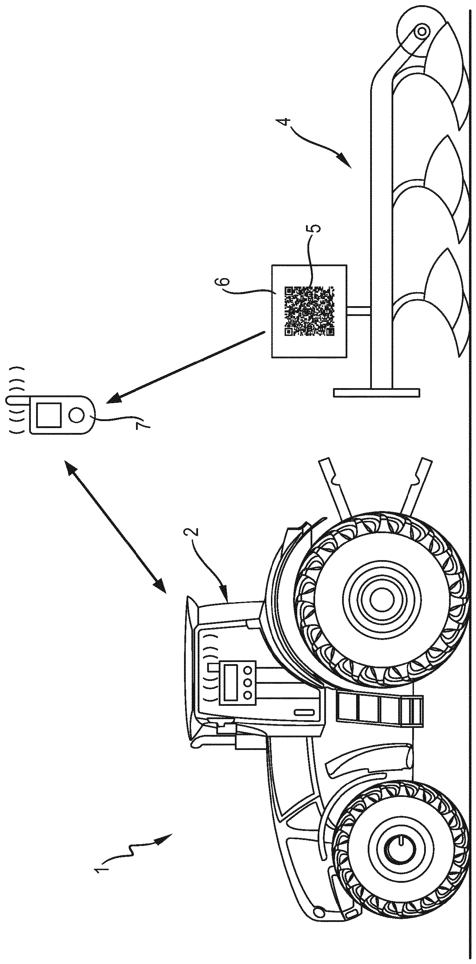

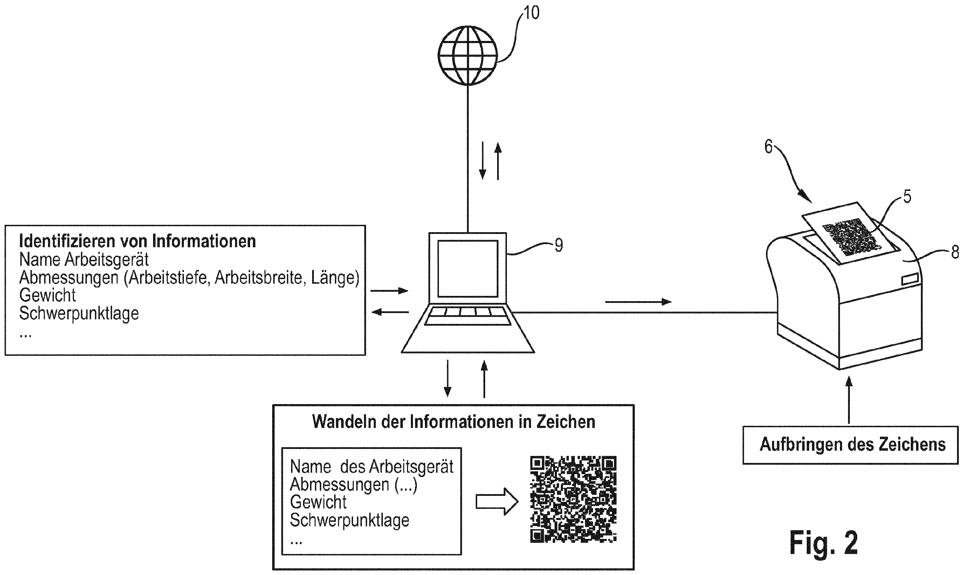

Die Erfindung wird nachfolgend anhand eines in den Fig. 1 und 2 veranschaulichten Ausführungsbeispiels näher erläutert. Darin zeigen:
- Fig. 1: eine schematische Ansicht eines Systems zur Erkennung eines Anbaugeräts,
- Fig. 2: eine schematische Ansicht eines Verfahrens zur Herstellung einer an ein Ar-beitsgerät anbringbaren Kennzeichnung.

Fig. 1 zeigt in schematischer Ansicht ein System zur Erkennung eines an ein landwirtschaftliches Fahrzeug anbaubaren Anbaugeräts. An ein landwirtschaftliches Fahrzeug in Form eines Traktors 1 ist ein Arbeitsgerät 4 anbaubar, bei dem es sich im gezeigten Ausführungsbeispiel um einen Pflug handelt. Der Traktor 1 verfügt über einen bordeigenen Rechner 3, der Teil einer Einrichtung zur Steuerung und Überwachung von unterschiedlichen Arbeitseinstellungen des Traktors 1 ist. Dazu ist der Bordrechner 3 auf für sich gesehen bekannte Weise über eine Vielzahl von Kabeln mit Arbeitsaggregaten, Sensoren und Bedieneinrichtungen des Traktors 1 verbunden, die hier nicht näher dargestellt sind.

Der beispielhaft gezeigte Pflug 4 verfügt - wie viele andere in der landwirtschaftlichen Praxis benutzte Arbeitsgeräte - nicht über ein elektronisches Bussystem. Wird der Pflug 4 durch Einhängen in den heckseitigen Dreipunkt-Kraftheber an den Traktor 1 angebaut, so ist es für einen sicheren und effizienten Betrieb des Gespanns aus Traktor 1 und Arbeitsgerät 4 vorteilhaft, technische Merkmale wie beispielsweise Abmessungen, Gewicht, Schwerpunktlage des Arbeitsgeräts 4 zu berücksichtigen. Für andere Arbeitsgeräte können zahlreiche weitere bzw. andere Merkmale eine zu berücksichtigende Rolle im Betrieb spielen, insbesondere wenn beispielsweise mittels Zapfwelle und/oder Hydraulikleitungen vom Traktor 1 Antriebsleistungen an das Arbeitsgerät 4 zu übertragen sind oder wenn sonstige vom Traktor 1 zu berücksichtigende Einstellungen zu beachten sind.

Zur erleichterten Erkennung kennzeichnender Informationen des Arbeitsgeräts 4 zeichnet sich das in Fig. 1 gezeigte System aus durch ein dem Arbeitsgerät 4 zugeordnetes optisch lesbares Zeichen 5, welches das Arbeitsgerät 4 kennzeichnende Informationen enthält, sowie durch eine optische Leseeinrichtung 7, die betreibbar ist, aus dem Zeichen 5 darin enthaltene Informationen über das Arbeitsgerät 4 auszulesen. Konkret ist dazu am Arbeitsgerät 4 eine Kennzeichnung 6, hier in Form eines Schildes, angebracht. Die Kennzeichnung 6 enthält ein optisch lesbares Zeichen 5, das auf ein Trägermaterial aufgebracht ist, beispielsweise darauf gedruckt ist.

Das Zeichen 5 enthält Informationen, welche das Arbeitsgerät 4 kennzeichnen. Diese Informationen können beispielsweise umfassen: gerätespezifische Angaben für den Betrieb des Arbeitsgeräts 4 und/oder gerätespezifische Angaben zu Wartung, Reparatur und/oder Ersatzteilen des Arbeitsgeräts 4, und/oder individuell vergebbare Angaben zum Arbeitsgerät 4. Daneben könnten die Informationen einen Verweis auf eine weitere Informationsquelle, insbesondere eine Internetadresse umfassen.

Damit das Zeichen 5 eine hohe Informationsdichte aufweist und zudem zuverlässig maschinell auslesbar ist, liegen die in dem Zeichen enthaltenen Informationen in verschlüsselter Form vor. Wie in Fig. 1 angedeutet, handelt es sich bei dem Zeichen 5 um eine gemäß QR-Code (Quick Response Code) binär verschlüsselte zweidimensionale Matrix aus schwarzen und weißen Punkten. Die Matrix enthält Orientierungsmerkmale, welche das richtige Auslesen der enthaltenen Informationen unterstützen, und weist eine Fehlertoleranz auf, die ein Auslesen des Zeichens 5 auch bei bis zu etwa 30% verdeckter Fläche ermöglicht.

Im gezeigten Ausführungsbeispiel ist für das System eine optische Leseeinrichtung in Form eines sogenannten Smartphones 7 vorgesehen, d.h. einer mobilen persönlichen Kommunikationseinrichtung, die mit einer Kamera ausgestattet ist. Das Smartphone 7 lässt sich dazu verwenden, mittels der integrierten Kamera das Zeichen 5 optisch zu erfassen und auszulesen. Dazu ist in einen Arbeitsspeicher des Smartphones 7 ein ausführbares Anwendungsprogramm ladbar. Dieses Programm unterstützt eine Bildauswertung des erfassten Kamerabildes, indem zunächst der Matrix die darin enthaltenen Binärinformationen entnommen werden und anschließend eine Entschlüsselung in das Arbeitsgerät 4 kennzeichnende Informationen erfolgt.

Sollte das Zeichen 5 einen Verweis auf eine Internetadresse enthalten, so könnte das Smartphone 7 selbständig eine Verbindung zum Internet aufbauen, um auf diese Informationsquelle zuzugreifen.

Das Smartphone 7 verfügt weiterhin über eine Datenschnittstelle zum Bordrechner 3 des Traktors 1. Eine Datenaustauschverbindung kann vorzugsweise drahtlos (z.B. funkbasiert, WiFi, Bluetooth, Infrarot) und/oder lösbar kabelgebunden (z.B. USB-Schnittstelle) zu einem Bedienterminal des Bordrechners 3 in der Fahrerkabine 2 des Traktors 1 hergestellt werden, so dass mittels des Smartphones 7 ausgelesene Informationen über das Arbeitsgerät 4 vom Bordrechner 3 empfangen werden können. Auf diese Weise können im Zeichen 5 hinterlegte Informationen auf komfortablem und sicherem Weg dem Bordrechner 3 verfügbar gemacht werden.

Eine vorteilhafte Ausgestaltung des Systems sieht vor, dass der Bordrechner 3 als Teil einer Einrichtung zur Steuerung und/oder Überwachung von Arbeitseinstellungen des Traktors 1 auf Grundlage der empfangenen Informationen (des Arbeitsgeräts 4) konfigurierende Einstellungen am Fahrzeug 1 vornehmen kann. So kann das System also vorteilhaft dazu genutzt werden, den Traktor 1 für den Betrieb mit dem Arbeitsgerät 4 zu konfigurieren. Für einen Maschinenbediener entfällt damit eine aufwendige und fehlerträchtige Eingabe von Arbeitseinstellungen am Bordrechner 3 des Traktors 1. Aufgrund der einfachen und kostengünstigen Herstellbarkeit des optisch lesbaren Zeichens 5 sowie der Nutzbarkeit eines ggf. bereits vorhandenen Smartphones 7 (oder einer für diesen Zweck vergleichbaren anderen mobilen Kommunikationseinrichtung) ist der Aufwand für die Ausstattung der Maschinen (hier: Traktor 1 und Arbeitsgerät 4) verhältnismäßig gering.

Es sei angemerkt, dass das beschriebene Prinzip auch auf andere Paarungen von landwirtschaftlichem Fahrzeug und Arbeitsgerät anwendbar ist. Beispielsweise könnten auch Fahrzeuge wie selbstfahrende Erntemaschinen sowie deren Anbaugeräte (z.B. auch Vorsatzgeräte, Anhänger etc.) Teile eines wie zuvor beschriebenen Systems sein, wobei die optische Erkennung anhand eines optisch auslesbaren, dem Arbeitsgerät zugeordneten Zeichens ähnliche Effekte und Vorteile erzielt. Zudem sei angemerkt, dass statt eines hier beispielhaft genannten Smartphones 7 selbstverständlich auch eine alternative mobile Kommunikationseinrichtung mit der geforderten Funktion zum Einsatz kommen kann.

In Fig. 2 ist in schematischer Ansicht ein Verfahren zur Herstellung einer an ein Arbeitsgerät anbringbaren Kennzeichnung dargestellt. Es handelt sich dabei bevorzugt um eine Kennzeichnung 6, die an dem im Zusammenhang mit Fig. 1 erläuterten Arbeitsgerät 4 anbringbar ist.

Wie durch den gezeigten Rechner 9 veranschaulicht, wird das Herstellverfahren gemäß bevorzugtem Ausführungsbeispiel von einem elektronischen Datenverarbeitungsprogramm unterstützt, das auf dem Rechner 9 ausgeführt wird. Das Programm kann beispielsweise über Zugriff auf das Internet 10 oder über einen auslesbaren Datenträger (nicht gezeigt) in den Speicher des Rechners 9 ladbar sein.

Gemäß der Darstellung werden zur Herstellung der Kennzeichnung 6 zunächst Informationen identifiziert, die das Arbeitsgerät 4 kennzeichnen. Im gezeigten Beispiel handelt es sich hierbei um Name, Abmessungen (Arbeitstiefe, Arbeitsbreite, Länge), Gewicht und Schwerpunktlage des Arbeitsgeräts 4. Zahlreiche weitere und/oder andere Informationen könnten als gerätekennzeichnend identifiziert werden. Das Identifizieren der Informationen wird im Rahmen des auf dem Rechner 9 ausgeführten Datenverarbeitungsprogramms unterstützt, indem ein Benutzer im Rahmen einer Abfrageroutine zur Auswahl und/oder Eingabe von Informationen aufgefordert wird. Alternativ oder ergänzend kann vorgesehen sein, dass der Rechner 9 dabei über das Internet 10 auf Informationsquellen zurückgreift, um technische Informationen aller Art über das Arbeitsgerät zu erhalten oder zu vervollständigen. Neben technischen Daten könnten über das Internet auch zusätzliche Informationen wie Betriebsanleitungen, Wartungshinweise oder dergleichen abgerufen werden, die in dem zu erzeugenden Zeichen 5 hinterlegt sein könnten.

Sobald die kennzeichnenden Informationen identifiziert sind, wird der nächste Schritt des Wandelns der Informationen ausgelöst. Dies erfolgt ebenfalls vorzugsweise im Rahmen des auf dem Rechner 9 ausgeführten Datenverarbeitungsprogramms, indem der Rechner 9 die zuvor identifizierten Informationen in ein maschinell optisch lesbares Zeichen 5 wandelt. Dabei werden die Informationen vorzugweise verschlüsselt in eine zweidimensionale binäre Matrix in Form eines QR-Codes.

Das so vom Rechner 9 erzeugte Zeichen 5 wird schließlich auf einen Träger aufgebracht, der zusammen mit dem Zeichen 5 eine Kennzeichnung 6 bildet. Dazu übermittelt der Rechner 9 das (digital) erzeugte Zeichen 5 an einen Drucker 8, der das Zeichen 5 auf ein Trägermaterial wie beispielsweise Papier oder Folie druckt. Die so hergestellte Kennzeichnung 6 enthält - in verschlüsselter Form - maschinell optisch auslesbare Informationen über das Arbeitsgerät 4 und ist in Form oder als Teil eines Schildes an dem Arbeitsgerät 4 anbringbar. Für eine Anbringung am Arbeitsgerät 4 ist es zweckmäßig, eine geeignete Schutzeinrichtung vorzusehen, um das Zeichen 5 vor äußeren Umgebungseinflüssen wie insbesondere Witterung und/oder betriebsbedingter Verschmutzung zu schützen.

Das gemäß Fig. 2 beschriebene Verfahren erlaubt eine einfache und kostengünstige Herstellung einer Kennzeichnung. Durch die mögliche Nutzung gängiger informationstechnischer Einrichtungen wie einem Rechner und einem Drucker kann die Herstellung vorteilhaft sogar von einem Betreiber landwirtschaftlicher Maschinen selbst vorgenommen werden. Dadurch lassen sich Kennzeichnungen praktisch jederzeit einfach (nach-) produzieren. Weiterhin ist mit dem Verfahren eine individuelle Auswahl von Informationen problemlos möglich, so dass vorteilhaft auch vom Betreiber persönlich gewünschte Informationen in dem Zeichen hinterlegt sein können.

### Bezugszeichenliste

- 1: Traktor
- 2: Fahrerkabine
- 3: Bordrechner
- 4: Arbeitsgerät
- 5: Zeichen
- 6: Kennzeichnung
- 7: Smartphone
- 8: Drucker
- 9: Rechner
- 10: Internet

## Patentansprüche

1. System zur Erkennung eines an ein landwirtschaftliches Fahrzeug (1) wie insbesondere an einen Traktor, einen Mähdrescher, einen Feldhäcksler oder dergleichen anbaubaren Arbeitsgeräts (4), mit einem dem Arbeitsgerät (4) zuzuordnenden optisch lesbaren Zeichen (5), welches das Arbeitsgerät (4) kennzeichnende Informationen enthält, sowie einer optischen Leseeinrichtung (7), die betreibbar ist, aus dem Zeichen (5) darin enthaltene Informationen über das Arbeitsgerät (4) auszulesen, **dadurch gekennzeichnet, dass** das Zeichen (5) als verschlüsseltes Zeichen auf einen Träger gedruckt ist und zusammen mit dem Träger eine an das Arbeitsgerät (4) anbringbare Kennzeichnung (6) bildet, wobei die Informationen gerätespezifische Angaben für den Betrieb des Arbeitsgeräts (4) umfassen und/oder gerätespezifische Angaben zu Wartung, Reparatur und/oder Ersatzteilen des Arbeitsgeräts (4) umfassen, und/oder individuell vergebbare Angaben zum Arbeitsgerät (4) in Form von persönlichen Erfahrungswerten oder Warnhinweisen umfassen, wobei die gerätespezifischen Angaben ein Gewicht, eine Schwerpunktlage des Arbeitsgeräts, hydraulische Kanalbelegungen, Ventileinstellungen, Flussraten, Zeitgeberwerte, Zapfwellengeschwindigkeiten und/oder Zapfwellenmomente umfassen, wobei das System einen Rechner (9), welcher zum Erzeugen des Zeichens (5) vorgesehen ist, und einen Drucker (8) umfasst, wobei das Zeichen (5) von dem Rechner (9) an den Drucker (8) übermittelbar und der Drucker (8) zum Drucken des Zeichens (5) auf den Träger ausgebildet ist.

2. System nach Anspruch 1, **gekennzeichnet durch** eine Ausgabeeinrichtung, die geeignet ist, mittels der optischen Leseeinrichtung (7) ausgelesene Informationen des Arbeitsgeräts (4) an einen Bediener auszugeben, insbesondere diesem anzuzeigen.

3. System nach Anspruch 1 oder 2, **dadurch gekennzeichnet, dass** die Informationen einen Verweis auf eine weitere Informationsquelle, insbesondere eine Internetadresse, umfassen.

4. System nach einem der Ansprüche 1 bis 3, **dadurch gekennzeichnet, dass** die in dem Zeichen (5) enthaltenen Informationen in verschlüsselter, insbesondere in binär verschlüsselter Form vorliegen.

5. System nach Anspruch 4, **dadurch gekennzeichnet, dass** die Informationen als zweidimensionale Matrix, insbesondere als QR-Code, verschlüsselt sind.

6. Anordnung aus einem landwirtschaftlichen Fahrzeug und einem System zur Erkennung eines an dem landwirtschaftlichen Fahrzeug anbaubaren Arbeitsgerätes nach einem der vorherigen Ansprüche.

7. Anordnung nach Anspruch 6, **dadurch gekennzeichnet, dass** das landwirtschaftliche Fahrzeug (1) über einen Bordrechner (3) verfügt, der mit der Leseeinrichtung (7) in Datenaustauschbeziehung bringbar ist, um ausgelesene Informationen über das Arbeitsgerät (4) zu empfangen.

8. Anordnung nach Anspruch 7, **dadurch gekennzeichnet, dass** der Bordrechner (3) Teil einer Einrichtung zur Steuerung und/oder Überwachung von Arbeitseinstellungen des Fahrzeugs ist, um betreibbar zu sein, auf Grundlage empfangener Informationen des Arbeitsgeräts (4) konfigurierende Einstellungen am Fahrzeug (1) vorzunehmen.

9. Anordnung nach Anspruch 7 oder 8, **dadurch gekennzeichnet, dass** die optische Leseeinrichtung dem Fahrzeug (1) zugeordnet ist, indem diese in kabelgebundener Datenaustauschbeziehung mit dem Bordrechner (3) des Fahrzeugs (1) steht.

10. Anordnung nach einem der Ansprüche 7 oder 8, **dadurch gekennzeichnet, dass** die optische Leseeinrichtung (7) einer mit dem Bordrechner (3) in Datenaustauschbeziehung bringbaren mobilen Kommunikationseinrichtung zugeordnet ist, insbesondere indem die Leseeinrichtung (7) in einem Smartphone, ein Mobiltelefon, einen Tablet-PC, einen sonstigen persönlichen digitalen Assistenten oder in ein Notebook integriert ist.

11. Anordnung nach einem der Ansprüche 6 bis 10, **dadurch gekennzeichnet, dass** der Leseeinrichtung (7) und/oder dem Bordrechner (3) eine Einrichtung zur Entschlüsselung des Zeichens (5) zugeordnet ist.

12. Anordnung nach einem der Ansprüche 6 bis 11, **dadurch gekennzeichnet, dass** die mobile Kommunikationseinrichtung (7) betreibbar ist, ein in deren Speicher ladbares elektronisches Datenverarbeitungsprogramm auszuführen, um das Zeichen (5) zu entschlüsseln.

## Claims

1. System for recognizing an implement (4) that can be attached to an agricultural vehicle (1) such as in particular to a tractor, a combine harvester, a forage harvester or the like, with an optically readable symbol (5), to be allocated to the implement (4), which contains information characterizing the implement (4) as well as an optical reading device (7) which can be operated to read from the symbol (5) information contained therein about the implement (4), **characterized in that** the symbol (5) is printed as an encrypted symbol on a support and, together with the support, forms a label (6) that can be applied to the implement (4), wherein the information comprises implement-specific details for operating the implement (4) and/or implement-specific details on maintenance, repair and/or spare parts of the implement (4), and/or comprises individually assignable details about the implement (4) in the form of personal experience values or warning messages, wherein the implement-specific details comprise a weight, a position of centre of gravity of the implement, hydraulic channel allocations, valve settings, flow rates, timer values, PTO shaft speeds and/or PTO shaft torques, wherein the system comprises a computer (9) which is provided to produce the symbol (5) and a printer (8), wherein the symbol (5) can be transmitted from the computer (9) to the printer (8), and the printer (8) is designed for printing the symbol (5) onto the support.

2. System according to claim 1, **characterized by** an output device which is suitable for issuing, in particular displaying, to an operator information about the implement (4) read by means of the optical reading device (7).

3. System according to claim 1 or 2, **characterized in that** the information comprises a reference to a further information source, in particular an internet address.

4. System according to one of claims 1 to 3, **characterized in that** the information contained in the symbol (5) is present in encrypted form, in particular in binary coded form.

5. System according to claim 4, **characterized in that** the information is encrypted as a two-dimensional matrix, in particular as QR code.

6. Arrangement of an agricultural vehicle and a system for recognizing an implement that can be attached to the agricultural vehicle according to one of the previous claims.

7. Arrangement according to claim 6, **characterized in that** the agricultural vehicle (1) has an on-board computer (3) which can be engaged in a data exchange relationship with the reading device (7) in order to receive read information about the implement (4).

8. Arrangement according to claim 7, **characterized in that** the on-board computer (3) is part of a device for controlling and/or monitoring work settings of the vehicle, to be operable to make configuring settings on the vehicle (1) on the basis of received information about the implement (4).

9. Arrangement according to claim 7 or 8, **characterized in that** the optical reading device is assigned to the vehicle (1) **in that** the device is engaged in a wired data exchange relationship with the on-board computer (3) of the vehicle (1).

10. Arrangement according to one of claims 7 or 8, **characterized in that** the optical reading device (7) is assigned to a mobile communication device which can be engaged in a data exchange relationship with the on-board computer (3), in particular in that the reading device (7) is integrated in a smartphone, a mobile phone, a tablet PC, another personal digital assistant or in a notebook.

11. Arrangement according to one of claims 6 to 10, **characterized in that** a device for decrypting the symbol (5) is assigned to the reading device (7) and/or the on-board computer (3).

12. Arrangement according to one of claims 6 to 11, **characterized in that** the mobile communication device (7) is operable to execute an electronic data processing program loadable into its memory, in order to decrypt the symbol (5).

## Revendications

1. Système de reconnaissance d'un outil de travail (4) attelable à un véhicule agricole (1) comme en particulier à un tracteur, à une moissonneuse-batteuse, à une ensileuse ou analogue, comprenant un signe lisible optiquement (5) qui est à associer à l'outil de travail (4) et qui contient des informations caractérisant l'outil de travail (4), ainsi que comprenant un équipement de lecture optique (7) qui est exploitable pour lire, à partir du signe (5), des informations sur l'outil de travail (4) qui y sont contenues, **caractérisé en ce que** le signe (5) est imprimé en tant que signe crypté sur un support et forme, conjointement avec le support, un marquage (6) apposable sur l'outil de travail (4), les informations englobant des données spécifiques à l'outil pour l'exploitation de l'outil de travail (4) et/ou englobant des données spécifiques à l'outil pour l'entretien, la réparation et/ou des pièces de rechange de l'outil de travail (4), et/ou englobant des données attribuables individuellement à l'outil de travail (4) sous forme de valeurs empiriques personnelles ou de messages d'alerte, les données spécifiques à l'outil englobant un poids, une position de centre de gravité de l'outil de travail, des circuits hydrauliques, des réglages de valves, des débits, des valeurs d'horloge, des vitesses de prise de force et/ou des couples de prise de force, le système englobant un ordinateur (9), qui est prévu pour produire le signe (5), et une imprimante (8), le signe (5) étant conçu de manière transférable de l'ordinateur (9) à l'imprimante (8), et l'imprimante (8) étant conçue pour imprimer le signe (5).

2. Système selon la revendication 1, **caractérisé par** un équipement de sortie qui est apte à sortir, en particulier à afficher, pour un utilisateur, des informations de l'outil de travail (4) lues au moyen de l'équipement de lecture optique (7).

3. Système selon la revendication 1 ou 2, **caractérisé en ce que** les informations englobent un renvoi à une source d'informations supplémentaire, en particulier à une adresse Internet.

4. Système selon une des revendications 1 à 3, **caractérisé en ce que** les informations contenues dans le signe (5) se présentent sous forme cryptée, en particulier cryptée binaire.

5. Système selon la revendication 4, **caractérisé en ce que** les informations sont cryptées sous forme de matrice bidimensionnelle, en particulier de code QR.

6. Agencement composé d'un véhicule agricole et d'un système de reconnaissance d'un outil de travail attelable au véhicule agricole selon une des revendications précédentes.

7. Agencement selon la revendication 6, **caractérisé en ce que** le véhicule agricole (1) dispose d'un ordinateur de bord (3) qui peut être mis en relation d'échange de données avec l'équipement de lecture (7) afin de recevoir des informations lues sur l'outil de travail (4).

8. Agencement selon la revendication 7, **caractérisé en ce que** l'ordinateur de bord (3) fait partie d'un équipement de commande et/ou de surveillance de réglages de travail du véhicule afin d'être exploitable pour effectuer des réglages configurants sur le véhicule (1) sur la base d'informations reçues de l'outil de travail (4).

9. Agencement selon la revendication 7 ou 8, **caractérisé en ce que** l'équipement de lecture optique est associé au véhicule (1) par le fait qu'il est en relation d'échange de données par câble avec l'ordinateur de bord (3) du véhicule (1).

10. Agencement selon une des revendications 7 ou 8, **caractérisé en ce que** l'équipement de lecture optique (7) est associé à un équipement de communication mobile pouvant être mis en relation d'échange de données avec l'ordinateur de bord (3), en particulier par le fait que l'équipement de lecture (7) est intégré à un smartphone, un téléphone mobile, une tablette informatique, un autre assistant numérique personnel ou à un notebook.

11. Agencement selon une des revendications 6 à 10, **caractérisé en ce qu'**à l'équipement de lecture (7) et/ou à l'ordinateur de bord (3) est associé un équipement de décryptage du signe (5).

12. Agencement selon une des revendications 6 à 11, **caractérisé en ce que** l'équipement de communication mobile (7) est exploitable pour exécuter un programme informatique électronique chargeable dans sa mémoire afin de décrypter le signe (5).
